# EUROPEAN PATENT SPECIFICATION

(11) **EP 3 620 227 B1**
(45) Date of publication and mention of the grant of the patent: **27.11.2024**
(21) Application number: 19000397.0
(22) Date of filing: 05.09.2019
(51) Int. Cl.: B01D 53/50, B01D 53/83, F23J 15/00, B01J 8/26

(54) **APPARATUS AND PROCESS FOR REMOVAL OF SULFUR DIOXIDE FROM FLUE GAS**
VORRICHTUNG UND VERFAHREN ZUR ENTFERNUNG VON SCHWEFELDIOXID AUS RAUCHGASEN
APPAREIL ET PROCÉDÉ POUR L'ÉLIMINATION DU DIOXYDE DE SOUFRE À PARTIR DE GAZ DE FUMÉES

(30) Priority: 05.09.2018 EP 18000715
(43) Date of publication of application: 11.03.2020
(73) Proprietor: Fujian Lonjing Environment Technology Co., Ltd., Xiamen Fujian (CN)
(72) Inventor: SAUER, Harald, 60433 Frankfurt am Main (DE)
(74) Representative: Meyer-Dulheuer MD Legal Patentanwälte PartG mbB

(56) References cited:
- EP-A1- 0 550 905
- WO-A1-2005/030368
- WO-A1-96/21504
- CN-A- 108 434 972
- JP-A- H02 309 103

## Description

The present invention relates to a method and respective apparatus or process plant unit for removing SO₂ from flue gases for producing anhydrous CaSO₄, by means of expanded fluidised bed reactor technology.

According to the state of the art, it is customary to detoxify industrially produced flue gases containing harmful SOₓ.

CN201791461U describes to bind and retain sulfuric dioxide from the gas phase by an adsorbent such as lime slurry or caustic soda liquid in a spray absorber tower, partly removing the sulfite thus formed as a sodium salt precipitate, and have the liquid borne-SO₃²⁻ thus generated oxidized to SO₄²⁻ in a further tank reactor step by air, recovering hydrated CaSO₄ × 2 H₂O (that is, gypsum) as a precipitate. As a disadvantage, liquid volumes are onerous to handle and precipitates formed are technically onerous to harvest, rinse and finally dry or calcinate, leaving aside considerable amounts of liquid waste material contaminated with heavy metals, in particular mercury. This way, this process is vested with serious environmental as well as economic problems.

The document EP0550905A1 describes a two-staged combustion and gas cleaning method utilizing a first and a second fluidised bed system, the method comprising the steps of supplying fuel to the first fluidised bed system, the fuel remaining fluidised during combustion thereof, supplying combustion air in a manner to provide for staged combustion of the fuel for minimizing NOₓ-emissions from the first fluidised bed system, operating the first fluidised bed system under oxidizing conditions to provide a substantially complete combustion of the fuel, supplying a Ca-based sorbent to the first fluidised bed system for absorbing the major part of gaseous sulfur compounds released during combustion of the fuel, separating the solids from the flue gases of the first fluidised bed system, introducing the flue gases after separation of solids therefrom from the first fluidised bed system as fluidising gas into the second fluidised bed system, introducing a catalyst material into the second fluidised bed system for catalyzing N₂O decomposition, and separating the solids from the flue gases of the second fluidised bed system. The method simultaneously reduces N₂O, SO₂, and CO in flue gases. The sorbent may be un-calcined limestone Ca(OH)₂ or calcined limestone CaO.

The document CN108434972A describes a method for the desulfurization of flue gas that is produced by a pyrometallurgical copper smelting process, the method comprising the steps of desulfurizing a flue gas from a pyrometallurgical copper smelting process in a high-temperature fluidised bed reactor by limestone CaCO₃ at a temperature of 800 to 850°C, further desulfurizing the flue gas in a subsequent first fluidised bed desulfurization tower with slaked lime Ca(OH)₂ and with calcium carbide slag at 250°C to 300 °C, and further desulfurizing the flue gas in a subsequent second fluidised bed desulfurization tower with slaked lime Ca(OH)₂, with calcium carbide slag and additionally with the used desulfurization absorbent from the first high-temperature fluidised bed reactor and the first fluidised bed desulfurization tower at 70 to 95°C, wherein the flue gas from the high-temperature fluidised bed reactor is used for the subsequent first fluidised bed desulfurization tower and the second fluidised bed desulfurization tower after separating off the used desulfurization absorbent. The document further describes a flue gas desulfurization system for pyrometallurgical copper smelting that comprises a flue gas transportation pipeline, a high-temperature fluidised bed reactor, a first heat exchanger, and two fluidised bed desulfurization towers sequentially connected in series to the flue gas transportation pipeline.

The document WO9621504A1 describes a method for the thermal cooling and cleaning of flue gases from a thermal treatment of waste by absorbing gaseous pollutants such as SO₂ and HCl in the flue gas to a solid sorption agent, and wherein after the thermal treatment of the waste the produced flue gas is directed as fluidisation gas into a circulating fluidised bed as a first stage and brought into contact with a sorption agent at temperatures above 600 °C, and wherein at least a part of the solid particles and the sorption agent are discharged from the circulating fluidised bed and are separated from the flue gas and redirected into the circulating fluidised bed, and wherein the flue gases are subsequently directed from the first stage into a second stage and brought into contact with a sorption agent at temperatures below 600°C. The document also describes a device for the operation of the process. The sorption agent may include all sorption agents that are capable of absorbing SO₂ or HCl, but is preferably CaCO₃, CaMg(CO₃)₂, CaO or Ca(OH)₂. The process overcomes the difficulties of the corrosiveness of the gaseous ingredients SO₂ and HCl in the flue gases from the thermal treatment of waste, and the different reaction profiles of these ingredients on the reaction with the sorption agent at different temperatures.

A known dry process for flue gas purification highly loaded with hazardous SOₓ involves catalytic oxidation of gaseous SO₂ with air to SO₃, gaseous SO₃ being the anhydride of sulfuric acid, which then must be liquified by dissolving it in (concentrated) sulphuric acid, yielding 98% sulphuric acid (known as oleum). That process is known as contact method, the catalyst to be contacted being V₂O₅ and the oxidation taking place at a temperature of from 400 to 700°C. This reaction is highly exothermic and hence simple to maintain, rather it must be controlled as not to shift to higher temperature which would ensue a lowered yield. As a disadvantage, the concentrated sulphuric acid thus generated is of much lower grade than competing 'purissime' product obtained from petrochemical raw materials; there is insufficient demand for the sulphuric acid product which essentially constitutes hazardous waste material for large part itself.

In combustion processes, e.g. in coal fueled power plants, another widely employed dry process is the removal of SO₂ by addition and reaction typically with solid Ca(OH)₂ (also called the direct method). Dry flue gas desulfurization consists in absorption of sulfur by Ca(OH)₂ or eventually CaO originating in situ from hydrated lime, or optionally limestone (decarbonization). After its introduction into the furnace chamber at several hundred degrees centigrade, the sorbent may be thermally dehydrated (calcination) in accordance with below described reactions:

Ca(OH)₂ → CaO + H₂O

The ensuing mixture of burnt and hydrated lime may react with SO₂ simultaneously with ongoing combustion according to the overall equations; which type of reaction prevails, is dependent on temperature:

CaO + SO₂ + ½ O₂ → CaSO₄ (anhydr.)

Ca(OH)₂ + SO₂ + ½ O₂ → CaSO₄ × 1 H₂O

Ca(OH)₂ + SO₂ → CaSO₃ × 0,5 H₂O

Dehydration occurs at a temperature above 400°C whilst decarbonization takes place at a temperature above 750 °C, hence use of limestone is a less favored option. At temperatures above 1200 °C, the ensuing anhydrous CaSO₄ itself starts to decompose again, some studies suggesting that temperatures above 800-900 °C are decreasing yield of CaSO₄ already.

A particular problem is the purification of SO₂-containing, highly contaminated flue gases from calcination ('roasting') of sulfidic copper ores, that is CuFeS₂, in the mining industry, giving rise to flue gas that is heavily contaminated by about 22% (vol./vol.) SO₂ or beyond, far more than usually found in flue gases from combustion processes. A high capacity process is needed there.

It is an object of the present invention to avoid the disadvantages of the prior art and to devise a process and apparatus which is efficient, allows of high yield and/or with high volumetric capacity and provides for a different, re-usable product. The process should allow of simple upscaling and should give rise post-process to a purified flue gas having a low residual content of SOₓ-gases. This object is solved by the method and the apparatus of the present invention.

In the method of the present invention, the process for desulphurizing flue gas comprising gaseous SO₂ and converting SO₂ into anhydrous CaSO₄, is comprising the steps of reacting the SO₂-comprising flue gas with inflowing solid Ca(OH)₂ and/or solid CaO in a first fluidised bed reactor which first reactor is operated at a higher temperature, and is preferably operated in an expanded, continuously circulating mode, wherein an effluent flue gas stream from the first fluidised bed reactor - having a residual content of gaseous SO₂ - is then used to directly contact solid Ca(OH)₂ and/or solid CaO in a lower temperature absorber unit which is a second fluidised bed reactor and which second reactor is preferably operated in an expanded, continuously circulating mode as well, said second reactor preferably mixing the effluent gas stream and said solids, and wherein effluent solid recirculating from said second fluidised bed reactor is at least partly removed for being used as said inflowing solid for the first fluidised bed reactor, and finally harvesting anhydrous CaSO₄ from said first fluidised bed reactor.

As a general principle of the present invention, the flue gas comprising the gaseous SO₂ is providing the fluidising medium for both reactors, preferably in which the finely coarse particles of said solids are carried along.

In the context of the present invention, anhydrous CaSO₄ is understood as to comprise still minimally hydrated CaSO₄ × 0,5 H₂O, which is the immediate precursor named Bassanite of the very anhydrous CaSO₄ trivially named Anhydrite. In a more preferred embodiment of the present invention, anhydrous CaSO₄ is understood as to refer but to Anhydrite CaSO₄ that is free of any water of hydration (× 0,0 H₂O) in the solid, crystalline state.

According to the present invention, an effluent flue gas stream from the first fluidised bed reactor is then used to heat gas-fluidised, solid Ca(OH)₂ and/or solid CaO streaming towards the first fluidised bed reactor in at least one indirect heat exchanger element operating in counterstream mode.

The at least one heat exchanger element is an indirect heat exchanger element operating in counterstream mode.

The effluent flue gas stream from the first fluidised bed reactor is then used to heat gas-fluidised, solid Ca(OH)₂ and/or solid CaO streaming towards the first fluidised bed reactor in at least one indirect heat exchanger element operating in counterstream mode. Examples of commercially available counterstream heat exchanger units operating in an indirect mode and suited for heat transfer inbetween gas-fluidised solids and a gaseous medium are plate heat exchangers, that is massively built process units typically comprising plate-like radiators heated or cooled by e.g. a gaseous medium, which radiators are situated in the interior of a larger tank or space contacting there a second streaming solid medium. They do also exist in combinations e.g. as shell-and-plate heat exchangers, which is deemed inclusive of the term plate heat exchanger in the present context. In such indirect heat exchangers, the counterstreaming substances are not in physical contact.

Without wanting to be limited by theory, it is the advantage of the present invention that whilst the reaction of SO₂ with solid Ca(OH)₂ and/or solid CaO to CaSO₃ is strongly exothermic, kinetically fast and requires temperature control and dissipation of heat, the consecutive reaction of CaSO₃ thus produced to yield solid anhydrous CaSO₄, is endothermic. It is thus energetically costly to maintain. Moreover, the conversion to anhydrous CaSO₄ is known to proceed with best yields at temperatures of maximally 850 °C, hence temperature must be controlled as well. The present invention allows of some moisture being present when working the process of the present invention but no slurry being generated anywhere in the process. It is further possible according to the present invention that some amount of SO₃ (gaseous) is produced directly by gas phase oxidation of SO₂ in the first fluidised bed reactor operating at such higher temperature of about 800 to 900 °C, however, absent an efficient catalyst this reaction does not allow of quantitative removal of SO₂.

As the bulk of heat is produced when 'fresh' flue gas is entering the first reactor and is reacting with unreacted solid Ca(OH)₂ and/or solid CaO (the solid sorbent for short), the ongoing reaction heats up the first reactor concomitant with consuming SO₂ and producing anhydrous CaSO₄. By removing hot effluent flue gas from the first reactor, heat is dissipated from the first reactor, the effluent flue gas serving both as a heat transfer medium as well carrying unreacted SO₂ which may then react with inflowing solid, unreacted Ca(OH)₂ and/or CaO when contacting such solid in the second reactor, where unreacted, solid Ca(OH)₂ and/or CaO is freshly fed to the reactor. Due to the low residual contents of SO₂ in the effluent flue gas at the point when reaching the second reactor, moderate amounts of heat are produced, allowing chiefly of converting SO₂ to CaSO₃ at the very stage of the second fluidised bed reactor or absorber unit, at low temperature - and certainly lower temperature as compared to the first reactor. At the stage of the second reactor, the [SO₂] in the flue gas is already diminished, and hence the kinetically fast capture by and reaction with the solid sorbent is efficient to reduce the residual level of SO₂ prior to finally releasing the thus purified flue gas to the environment. Moreover, higher temperatures could produce unwanted sideproduct, that is CaCO₃ or CaHCO₃ at the stage of the second reactor or absorber unit. In contrast, heat produced at the stage of the first reactor allows the reaction to proceed to yield anhydrous CaSO₄ by warming up the solid reactants streaming into the first reactor from the second reactor or absorber unit, thus allowing of formation of anhydrous CaSO₄ in an energetically cheap and environmentally sustainable way. Transfer of hot effluent gas from the first reactor helps to dissipate heat from the first reactor, locally, and to use it productively, in particular in combination with an at least one indirect heat exchanger element in between the two reactors.

In a further preferred embodiment of one of the methods of the present invention, the first fluidised bed reactor is operated at a temperature of from 500 °C to 1000 °C, preferably is operated of from 600°C to 900 °C, most preferably is operated of from 650°C to 850 °C.

In a further preferred embodiment, the second fluidised bed reactor is cooled or controlled to a temperature of from 40 to 140°C, meaning temperature is kept above but closer to the dew point of water e.g. by water injection, preferably water is injected into the second reactor, more preferably water is injected into or near an entry point of the second reactor for fluidising gas and/or for a solid. The water injection could take place by means of spraying or by exploiting the turbulences created by the fluidising gas in the reactor, in expanded fluidised bed operation mode. Water injection promotes a higher efficiency of SO₂ capture; clearly, in the context of the present invention, the amount of water injected never compromises the solid state or morphology of the solid sorbent and does never anywhere near a slurry process (a liquid or at best semi-dry process). Clearly, the skilled person in the art will consider and refer to the flue gas desulfurization method of the present invention always as a 'dry' desulfurization process, despite that some water injection may take place in the method of the present invention.

In a further preferred embodiment, the method according to the present invention is always carried out as a heterogenous gas-solid process and/or is carried out substantially in the absence of any liquid slurry being formed.

In a further preferred embodiment, the waste gas of the process is released after passing through the absorber unit or the second fluidised bed reactor and is controlled at ≤ 20 mg/m³ SO₂ (at 20°C and 1013,25 mbar, dry weight, 6 Vol.% O₂). SO₂ concentration in the gas phase is measured by means of infrared thermography (IRT), employing an IR camera fitted with PtSi detector (company 'Thermosensorik', Germany); the method is described in full in J. Loskyll et al., ACS Comb. Sci. 2012, 14, pp. 295-203.

More preferably, in the method according to the present process, the primary flue gas which is sought to be purified or desulphurized, may comprise up to 20 Vol.% SO₂ or more. At such levels, the absorption to and reaction with the solid sorbent generates sufficient heat as to sustain the process.

Again in a preferred embodiment of the present invention, the first fluidised bed reactor is heated by the reaction of SO₂ with Ca(OH)₂ and/or solid CaO to yield CaSO₃. More preferably, the stoichiometric ratio of Ca:S in the first fluidised bed reactor is of from 1.2 to 2.5, preferably is of from 1.4 to 2.2.

Further preferably, at least the first fluidised bed reactor is operated at a gas velocity of from 1 to 20 m/s, more preferably from at least 4 m/s, most preferably from at least 5 up to 10 m/s, as defined in relation to the empty reactor space. Again, more preferably this applies to operation of the second fluidised reactor as well.

Preferably, the method according to the present invention utilizes for sorbent 'solids' that are particulate material of from 0,001 to 2 mm in diameter (meaning mesh size: - 0,001 +2 [mm] mesh), more preferably is 0,005 to 0,05 mm in diameter (meaning - 0,005 +0,05 [mm] mesh), allowing of formation of a fluidised bed. Optionally, the solids used as sorbent is particulate material having a volumetric d50 value of from 0,05 to 2,5 mm. Again, more preferably, the solid is a particulate material wherein at least 60%, most preferably at least 70% (wt/wt) of the solid sorts out within the desired particle size range, given that typically any such solid will have a continuous particle size distribution. Further preferred is that solid Ca(OH)₂, in the context of the present invention, is hydrated lime and/or the solid CaO is burnt lime (not quicklime), both typically originating either from calcination of minerals or optionally thermal treatment of industrial wastes, such as e.g. white mud from papermaking. In the present context, 'hydrated lime' means 'dry hydrated' lime having no discernible liquid phase and still distinct granular morphology, as to distinguish the term from any slurried preparation. More preferably, as regards common commercial qualities available, hydrated lime Ca(OH)₂ is employed as the solid sorbent because the re-hydration process results in more finely grained, smaller particles as compared to the burnt lime it is usually made from. However, it is also possible to re-calcinate such fine Ca(OH)₂ particles, as to obtain more finely grained grades of burnt lime CaO having the desired particle size. Alone or in combination with the foregoing, it is preferred that the solid Ca(OH)₂ and/or the solid CaO is having a BET surface area of from 15 to 25 m²/g (BET: nitrogen absorption test). Essentially, the solid sorbent of the present invention is a porous or microporous material. In again another embodiment, it is preferred that the solid sorbent is a synthetic nano-CaO sorbent having the pore size distribution and size range as described in Moshiri et al., Micro & Nano Letters 10 (10), October 2015, 'Enhancing SO₂ capture capacity by preparation of a nano-CaO sorbent with modified structural parameters'.

Preferably, according to the method of the present invention, the relative humidity in the process is 20% relative humidity or less, especially and preferably in the absorber unit or second fluidised reactor. Again, more preferably, the temperature in the overall process or process plant, and especially in the second fluidised bed reactor unit, is controlled to remain at or above the dew point of water of from 2 to 50 °C, more preferably of from 10 to 40 °C.

Most preferably, the method of the present invention is worked in the absence of a catalyst catalysing oxidation of SO₂, more preferably in the absence of Vanadium(V)oxide or Platinum catalysts.

During operation of a fluidised bed in the first and optionally the second fluidised bed reactor, preferably the averaged residential time in the reactor for solids is of from 15 min. to 200 min. or more, and/or a load density for solids is of from 1 kg/m³ to 10 kg/m³.

According to the present invention, the term 'expanded, recirculating fluidised bed' reactor describes an expanded state of the fluidised bed necessitating recirculation of solid due to a steady low loss rate of solid, preferably of less than 40% (w/w) solid/s, more preferably less than 20% (w/w) solid material/s based on the total amount of solids in the reactor space.

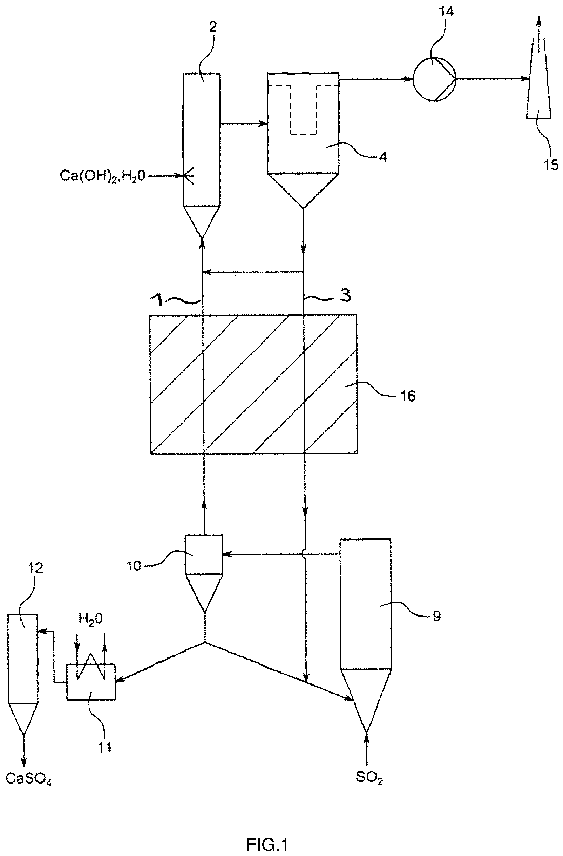

Further, the present definition of expanded, recirculating fluidised bed operation mode of a reactor is based on the Reh-Diagram, that is well known to the skilled person. In the present context, we refer to an annotated version thereof as given in Gmehling/Brehm, Grundoperationen - Lehrbuch der Technischen Chemie Band 2, 1996, Georg Thieme Verlag, Stuttgart, Figure 1.11, page 26. A circulating fluidised bed is defined as the process condition confined as the area in between the boundaries ε=1 and ε=0,4, or more preferably in between ε=1 and ε=0,7 wherein ε or εmf is the porosity/interparticle pore rate as employed in standard equation for calculating the fluidization point. Most preferred is a value of about ε=0,9. Typically in expanded, recirculating fluidised bed reactor operation, for creating the desired turbulent mixing of the solid phase in the reactor within the gas phase, is the slip effect or slip velocity ≠ 0. This means that there is a numerical difference in average velocity of the solids or solid phase and of the gas phase, the solids having a lower average velocity than the gas phase falling back when lifted upward in the reactor by fluidising bed. If in contrast to the present invention, both phases moved at the same velocity, velocity ratio would be unity (no slip) and plug flow would be established; this takes place at higher absolute gas velocities. Again, more preferred is that the solid recirculation rate for the fluidised bed reactors is of from 90 to 99%.

The loss of solids from a fluidised bed reactor in an expanded, circulating mode requires recovery of solids from effluent gas, conveniently and typically by means of an aerocyclone or cyclone unit as is well known to the skilled person. It is however optionally feasible, to employ a filter unit as a separating unit such as a cloth or bag filter, especially in conjunction with the second fluidised bed reactor.

In a further preferred embodiment, the initial flue gas comprising gaseous SO₂ to be purified according to one of the methods of the present invention, is generated by thermic treatment of a sulfidic ore, more preferably a sulfidic ore of copper, most preferably by heating up CuFeS₂.

It is a further object of the invention to devise a scalable processing unit or apparatus for carrying out the invention; both terms are used synonymously in the present context.

Accordingly, it is devised an apparatus for desulphurizing flue gas comprising SO₂, the apparatus comprising a first fluidised bed reactor having an inlet for incoming, primary flue or fluidising gas and being operable in an expanded circulating mode and further having an outlet for secondary, effluent waste gas and the apparatus further comprising a second fluidised bed reactor being operable in an expanded circulating mode and having an inlet for said secondary, effluent waste gas as well as at least one further second inlet for dosing solid, particulate material into the reactor, wherein
- first connecting elements serve to transport said secondary effluent waste gas from the first reactor to the gas inlet of the second reactor, and second connecting elements serve to transport effluent solids removed from the second reactor to the first reactor, and further wherein
- the apparatus comprises at least one indirect heat exchanger element fitted in between the first connecting elements for the effluent waste gas from the first reactor and the second connecting elements for the effluent solids from the second reactor, for mediating indirect heat exchange in between the effluent solids and the effluent waste gas.

The connecting elements is tubing or piping that may tightly transport gas or solid which is fluidised in a gas phase in between the reactors and any intervening process installation.

It is possible, in the present context, that the first and second inlets of the second reactor are the same or different, depending on their positioning in or on the reactor. As one option, the inlet on the second reactor for the secondary waste gas is arranged as to employ it as fluidising medium, streaming up from the bottom of the fluidised bed reactor, which may be a sieve plate or is favorably made up from at least one nozzle, expediently and favorably is devised as an array of nozzles as described in WO2013023800A1. In that instance, solid will favorably be fed to the reactor via a different point of entry, at a point with high gas velocity within the reactor during operation. The same reasoning holds true for any recirculation matter for the first reactor.

The heat exchanger unit is a counterstream heat exchanger unit operating in indirect mode.

In a preferred embodiment, the first fluidised bed reactor is employing said primary flue gas as fluidising medium, optionally wherein said primary flue gas is furnished by another process or process unit. In that same embodiment, the second fluidised bed reactor is employing said secondary effluent waste gas as a fluidising medium.

Again preferably, the apparatus comprises effluent solid that is particulate material of from 0,001 to 2 mm in diameter (mesh size definition, that is -0,001 + 2 with sizing unit being [mm]).

In a further preferred embodiment, a first cyclone unit is connected to the outlet and an inlet of said first reactor for removal and recirculation of solids from said effluent waste gas into said first reactor again, and wherein preferably a second cyclone or cloth filter, is connected to the outlet of said second reactor, for removal and recirculation of effluent solids into said second reactor, and preferably a junctional element allows of removing solids, preferably anhydrous CaSO₄, from the recirculation loop for solids of said first reactor, more preferably further comprising a cooling device and/or storage silo for the solids, preferably anhydrous CaSO₄, that may be harvested this way during operation as the final product or optionally may be recirculated back to a Venturi unit for cooling.

In another embodiment, the first reactor, and optionally said recirculation loop for solids comprising the cyclone unit of the first reactor, is fitted with heat-resistant materials as to allow of operation temperatures of from 500-1000 °C, optionally and more preferably is further equipped with insulation materials as to minimize heat loss to the environment, and/or wherein the second reactor is having means for cooling the reactor during operation, preferably has conduits for injecting water during operation.

The accompanying figures serve to illustrate invention and particular embodiments by possible process flow schemes, without wanting to restrict the present invention to them. As a general remark, the realization of such process schemes necessitates regulatable and/or junctional elements such as valves or sliders, or sensory fittings, none of which is depicted in the process flow schemes hereunder.

Fig. 1 outlines the basic process by way of a simple process unit, wherein a schematically depicted indirect counterstream heat exchanger unit (16), e.g. a plate heat exchanger unit (16), is engineered in between the first and second fluidised bed reactor (9,2).

Anhydrous CaSO₄ of inferior chemical purity is a product that may be sold in large amounts to the construction industry; it must however be produced in an energetically economic, that is energy-saving and sustainable way, and the process of flue desulphurization should drastically reduce the amount of harmful SOₓ released to the environment finally.

Typically, refining of copper ores has the problem of the known contact process with chemical catalysts not being usable for desulphurizing flue gas generated by heating, as the ensuing concentrated sulphuric acid carries to many metallic impurities. Refining of CuFeS₂ means heating the ore for reducing the ore to metallic copper, concomitantly generating flue gas with 22 Vol.% SO₂ or more. It is an example of a process generating extremely heavily contaminated flue gases, that when released into the environment, would give rise to acid rain.

The kinetically fast reaction of SO₂ with hydrated lime Ca(OH)₂ produces CaSO₃ × 1/2 H₂O at about 75 °C, and is in itself exothermic. At about 22 Vol.% SO₂ carried in the flue gas, the amount of heat generation is important enough as to sustain, without further external energy consumption, in a next step the endothermic oxidation of CaSO₃ to anhydrous CaSO₄. It is the gist of the instant invention to couple those two reaction steps both with high heat transfer capacity as well as with high volumetric SO₂-capture capacity, and to allow of suitable temperature control in the process for maximizing yield of the sulfate product.

Dry solid hydrated lime Ca(OH)₂ is introduced into the second fluidised bed reactor (2) which constitutes the finishing dry process step for incoming, prepurified flue gas encompassing but residual amounts of SO₂ at this stage; for dissipating the heat produced by gas-borne SO₂ reacting with the solid Ca(OH)₂, moderate amounts of water are sprayed into the second reactor (2) for controlling the temperature at about 75 °C, though slurry formation is to be strictly avoided. The second fluidised bed reactor (2) serves to physically absorb last amounts of SO₂ from the flue gas prior to its release from the plant through a gas pump or ID fan (14) and stack (15), both said ID fan (14) and stack (15) being connected to a recirculation loop of the second reactor including a bag or cloth filter (4) for solid/gas separation.

The primary flue gas comprising the initial high levels of SO₂ enters the process unit at the opposite end, namely as the fluidising medium for the first fluidised bed reactor (9). Thus, the solid sorbent and the flue gas are entering the apparatus or process unit of the present invention from opposite ends, and pass through it in counterstream essentially.

The bag filter (4) serves to remove the CaSO₃ × 1/2 H₂O formed in said second fluidised bed reactor (2) for recirculating it into the second reactor (2), establishing a circulating fluidised bed this way which ensures an optimally extended active surface contact in between the heterogenous phases.

At a branchpoint or junctional regulatable element of the recirculation loop from the second reactor (2), a sidestream of the recirculating solid material is transported towards the first fluidised bed reactor (9) operating at about 750-850 °C. The bulk reaction takes places in the final stage at which the solids arrive, that is the first fluidised bed reactor (9). Here first contact and quantitative reaction of the SO₂ from flue gas with the sorbent, that is the hydrated lime, takes place, and this is the place of the highest process temperature, namely 750-850 °C. In the first fluidised bed reactor (9) operating as an expanded recirculating fluidised bed reactor, most of the heat is probably generated by initial conversion to CaSO₃ × 1/2 H₂O, and is separated and recovered from effluent, secondary flue gas in a recirculation loop by a further cyclone (10).

Once a sufficient purity of product is obtained in the first recirculating fluidised bed reactor (9), product may be drawn from a regulatable branchpoint and cooled in a respective process unit (11) and finally stored in a storage silo (12).

### List of Reference Labels

| Reference Label | |
|---|---|
| 1 | first connecting element |
| 2 | second fluidised bed reactor |
| 3 | second connecting element |
| 4 | filter unit |
| 9 | first fluidised bed reactor |
| 10 | cyclone |
| 11 | cooling unit |
| 12 | storage silo |
| 13 | - |
| 14 | induced draft fan (ID fan) |
| 15 | stack |
| 16 | heat exchanger unit (indirect, counterstream) |

## Claims

1. Process for desulphurizing flue gas comprising gaseous SO₂ and converting SO₂ into anhydrous CaSO₄, comprising the steps of
• reacting the SO₂-comprising flue gas with inflowing solid Ca(OH)₂ and/or solid CaO in a first fluidised bed reactor (9) which first reactor is operated at higher temperature, wherein
• an effluent flue gas stream from the first fluidised bed reactor (9) is then used to directly contact solid Ca(OH)₂ and/or solid CaO in a lower temperature absorber unit which absorber unit is a second fluidised bed reactor (2), and
• wherein effluent solid recirculating from said second fluidised bed reactor (2) is at least partly removed for being used as said inflowing solid for the first fluidised bed reactor (9), and
• finally harvesting anhydrous CaSO₄ from said first fluidised bed reactor (9), and
• the effluent flue gas from the first fluidised bed reactor (9) is transported by first connecting elements (1) to the gas inlet of the second fluidised bed reactor (2), and the effluent solids removed from the second fluidised bed reactor (2) are transported by second connecting elements (3) to the first fluidised bed reactor (9),
**characterized in that**
• the effluent flue gas stream from the first fluidised bed reactor (9) is used to heat gas-fluidised, solid Ca(OH)₂ and/or solid CaO streaming towards the first fluidised bed reactor (9) from the second fluidised bed reactor (2) in at least one heat exchanger element (16) operating in counterstream mode, and
• the heat exchange is mediated in between the effluent solids and the effluent waste gas by heat exchange between the first connecting elements (1) for the effluent waste gas from the first fluidised bed reactor (9) and the second connecting elements (3) for the effluent solids from the second fluidised bed reactor (2), and
• the at least one heat exchanger element (16) is an indirect heat exchanger element operating in counterstream mode.

2. Process according to claim 1, wherein the first reactor or the second fluidised bed reactor or both are operated in an expanded, continuously circulating mode.

3. Process according to claim 1 or 2, wherein solid Ca(OH)₂ is hydrated lime and/or the solid CaO is burnt lime, and preferably is not any naturally occuring mineral.

4. Process according to claim 1 or 2, wherein the solid Ca(OH)₂ or solid CaO is a porous material having a BET surface area of from 5 to 25 m²/g or more.

5. Process according to one of the preceding claims, wherein the first fluidised bed reactor (9) is operated at a temperature of from 500 °C to 1000 °C, preferably is operated of from 650 °C to 850 °C.

6. Process according to claim 3 above, wherein the second fluidised bed reactor (2) is cooled to a temperature of from 40 °C to 140 °C, preferably by water-injection into or near an entry point for gas and/or solid of the second fluidised bed reactor (2).

7. Process according to one of the preceding claims, wherein the process is always carried out as a heterogenous gas-solid process and/or is carried out substantially in the absence of any liquid slurry being formed.

8. Process according to one of the preceding claims, wherein the waste gas of the process is released after passing through the absorber unit or the second fluidised bed reactor (2) and is controlled at ≤ 20 mg/m³ SO₂ at 20 °C and 1013,25 mbar; dry weight, 6 Vol.% O₂.

9. Process according to claim 1 or 2, wherein the first fluidised bed reactor (9) is heated by the exothermic reaction of SO₂ with Ca(OH)₂ and/or solid CaO during operation.

10. Process according to claim 9, wherein the stoichiometric ratio of Ca:S in the first fluidised bed reactor (9) is of from 1.2 to 2.5, preferably is of from 1.4 to 2.2.

11. Process according to one of the preceding claims, wherein at least the first fluidised bed reactor (9) is operated at a gas velocity of at least 4 m/s or beyond, preferably of up to 10 m/s.

12. Process according to claim 1 to 11, wherein solid Ca(OH)₂ and/or solid CaO is introduced into the second fluidised bed reactor (2) which constitutes the finishing dry process step for incoming, prepurified flue gas encompassing but residual amounts of SO₂ at this stage, and moderate amounts of water are sprayed into the second fluidised bed reactor (2) for controlling the temperature at about 75 °C.

13. Apparatus for desulphurizing flue gas comprising SO₂, the apparatus comprising a first fluidised bed reactor (9) having an inlet for incoming, primary flue or fluidising gas and being operable in an expanded circulating mode and further having an outlet for secondary, effluent waste gas and the apparatus further comprising a second fluidised bed reactor (2) being operable in an expanded circulating mode and having an inlet for said secondary, effluent waste gas as well as at least one further inlet for dosing solid, particulate material into the reactor, wherein
• first connecting elements (1) serve to transport said secondary effluent waste gas from the first reactor (9) to the gas inlet of the second reactor (2), and second connecting elements (3) serve to transport effluent solids removed from the second reactor (2) to the first reactor (9),
**characterized in that**
• the apparatus comprises at least one heat exchanger element (16) fitted in between the first connecting elements (1) for the effluent waste gas from the first reactor (9) and the second connecting elements (3) for the effluent solids from the second reactor (2), for mediating heat exchange inbetween the effluent solids and the effluent waste gas, and
• the heat exchanger element (16) is a counterstream heat exchanger element operating in indirect mode.

14. Apparatus according to claim 13, wherein the indirect heat exchanger element (16) operating in counterstream mode is a plate heat exchanger.

15. Apparatus according to claim 13, wherein the indirect heat exchanger element (16) is a shell-and-plate heat exchanger.

16. Apparatus according to claims 13 to 15, wherein the second fluidised bed reactor (2) is cooled or controlled to a temperature of 40 to 140 °C, meaning temperature is kept above but closer to the dew point of water, and has a water injection into or near an entry point of the second fluidised bed reactor (2) for fluidising gas and/or for a solid.

17. Apparatus according to claim 13, wherein the first fluidised bed reactor (9) is employing said primary flue gas as fluidising medium, and wherein said primary flue gas is generated by another process or process unit, and wherein the second fluidised bed reactor (2) is employing said secondary effluent waste gas as a fluidising medium.

18. Apparatus according to claim 13 and following, wherein a first cyclone unit (10) is connected to the outlet of said first reactor (9) for removal and recirculation of solids from said effluent waste gas into said first reactor (9) again, and wherein a second filter unit (4), preferably a second cyclone, is connected to the outlet of said second reactor (2), for removal and recirculation of effluent solids into said second reactor (2), and preferably wherein a junctional regulatable element allows of removing solids, preferably anhydrous CaSO₄, from the recirculation loop for solids of said first reactor (9) and optionally is further comprising downstream of such junctional element a cooling unit (11) and/or storage chamber (12) for the anhydrous CaSO₄ that may be harvested this way during operation.

19. Apparatus according to claim 13, wherein the first reactor (9), and optionally a recirculation loop for solids comprising the cyclone unit (10), is fitted with heat-resistant materials as to allow of operation temperatures of from 500-1000 °C, optionally and preferably is equipped with insulation materials as to minimize heat loss to the environment, and/or wherein the second reactor (2) is having means for cooling the second reactor (2) during operation, preferably has at least one conduit for injecting water during operation.

20. Apparatus according to claim 13, wherein the apparatus comprises effluent solid that is particulate material of from 0,001 to 2 mm in diameter (mesh size: - 0,001 +2 [mm]).

## Patentansprüche

1. Verfahren zur Entschwefelung von Rauchgas, das gasförmiges SO₂ enthält, und zur Umwandlung von SO₂ in wasserfreies CaSO₄, umfassend die Schritte
• Umsetzen des SO₂-haltigen Rauchgases mit einströmendem festem Ca(OH)₂ und / oder festem CaO in einem ersten Wirbelschichtreaktor (9), der bei höherer Temperatur betrieben wird, wobei
• ein abfließender Rauchgasstrom aus dem ersten Wirbelschichtreaktor (9) dann verwendet wird, um festes Ca(OH)₂ und / oder festes CaO in einer Absorbereinheit mit niedrigerer Temperatur direkt zu kontaktieren, wobei die Absorbereinheit ein zweiter Wirbelschichtreaktor (2) ist, und
• wobei abfließender Feststoff, der aus dem zweiten Wirbelschichtreaktor (2) rezirkuliert, zumindest teilweise entfernt wird, um als der einfließende Feststoff für den ersten Wirbelschichtreaktor (9) verwendet zu werden, und
• schließlich Entnahme von wasserfreiem CaSO₄ aus dem ersten Wirbelschichtreaktor (9), und
• das aus dem ersten Wirbelschichtreaktor (9) abströmende Rauchgas durch erste Verbindungselemente (1) zum Gaseinlass des zweiten Wirbelschichtreaktors (2) transportiert wird, und die aus dem zweiten Wirbelschichtreaktor (2) entfernten abströmenden Feststoffe durch zweite Verbindungselemente (3) zum ersten Wirbelschichtreaktor (9) transportiert werden,
**dadurch gekennzeichnet, dass**
• der abfließende Rauchgasstrom aus dem ersten Wirbelschichtreaktor (9) zur Erwärmung von gasförmigem, festem Ca(OH)₂ und / oder festem CaO, das aus dem zweiten Wirbelschichtreaktor (2) zum ersten Wirbelschichtreaktor (9) strömt, in mindestens einem im Gegenstrom arbeitenden Wärmetauscherelement (16) verwendet wird, und
• der Wärmeaustausch zwischen den abfließenden Feststoffen und dem abfließenden Abgas durch Wärmeaustausch zwischen den ersten Verbindungselementen (1) für das abfließende Abgas aus dem ersten Wirbelschichtreaktor (9) und den zweiten Verbindungselementen (3) für die abfließenden Feststoffe aus dem zweiten Wirbelschichtreaktor (2) vermittelt wird, und
• mindestens ein Wärmetauscherelement (16) ein indirektes Wärmetauscherelement ist, das im Gegenstromverfahren arbeitet.

2. Verfahren nach Anspruch 1, wobei der erste Reaktor oder der zweite Wirbelschichtreaktor oder beide in einem expandierten, kontinuierlich zirkulierenden Modus betrieben werden.

3. Verfahren nach Anspruch 1 oder 2, wobei das feste Ca(OH)₂ Kalkhydrat ist und / oder das feste CaO gebrannter Kalk ist und vorzugsweise kein natürlich vorkommendes Mineral ist.

4. Verfahren nach Anspruch 1 oder 2, wobei das feste Ca(OH)₂ oder feste CaO ein poröses Material mit einer BET-Oberfläche von 5 bis 25 m²/g oder mehr ist.

5. Verfahren nach einem der vorhergehenden Ansprüche, wobei der erste Wirbelschichtreaktor (9) bei einer Temperatur von 500 °C bis 1000 °C, vorzugsweise von 650 °C bis 850 °C, betrieben wird.

6. Verfahren nach Anspruch 3, wobei der zweite Wirbelschichtreaktor (2) auf eine Temperatur von 40 °C bis 140 °C gekühlt wird, vorzugsweise durch Wassereinspritzung in oder in der Nähe einer Eintrittsstelle für Gas und / oder Feststoff des zweiten Wirbelschichtreaktors (2).

7. Verfahren nach einem der vorhergehenden Ansprüche, wobei das Verfahren stets als heterogener Gas-Feststoff-Prozess und / oder im Wesentlichen ohne Bildung eines flüssigen Schlamms durchgeführt wird.

8. Verfahren nach einem der vorhergehenden Ansprüche, wobei das Abgas des Verfahrens nach Durchlaufen der Absorbereinheit oder des zweiten Wirbelschichtreaktors (2) freigesetzt und auf < 20 mg/m³ SO₂ bei 20 °C und 1013,25 mbar geregelt wird; Trockengewicht, 6 Vol.% O₂.

9. Verfahren nach Anspruch 1 oder 2, wobei der erste Wirbelschichtreaktor (9) durch die exotherme Reaktion von SO₂ mit Ca(OH)₂ und / oder festem CaO während des Betriebs aufgeheizt wird.

10. Verfahren nach Anspruch 9, wobei das stöchiometrische Verhältnis von Ca:S im ersten Wirbelschichtreaktor (9) von 1,2 bis 2,5, vorzugsweise von 1,4 bis 2,2 beträgt.

11. Verfahren nach einem der vorhergehenden Ansprüche, wobei zumindest der erste Wirbelschichtreaktor (9) mit einer Gasgeschwindigkeit von mindestens 4 m/s oder mehr, vorzugsweise von bis zu 10 m/s, betrieben wird.

12. Verfahren nach einem der Ansprüche 1 bis 11, wobei festes Ca(OH)₂ und / oder festes CaO in den zweiten Wirbelschichtreaktor (2) eingeführt wird, der die abschließende trockene Verfahrensstufe für ankommendes, vorgereinigtes Rauchgas darstellt, das in diesem Stadium nur noch Restmengen an SO₂ enthält, und mäßige Mengen an Wasser in den zweiten Wirbelschichtreaktor (2) gesprüht werden, um die Temperatur auf etwa 75 °C zu regeln.

13. Vorrichtung zur Entschwefelung von SO₂-haltigem Rauchgas, wobei die Vorrichtung einen ersten Wirbelschichtreaktor (9) umfasst, der einen Einlass für ankommendes, primäres Rauch- oder Wirbelgas aufweist und in einem expandierten Zirkulationsmodus betrieben werden kann und ferner einen Auslass für sekundäres, abfließendes Abgas aufweist, und wobei die Vorrichtung ferner einen zweiten Wirbelschichtreaktor (2) umfasst, der in einem expandierten Zirkulationsmodus betrieben werden kann und einen Einlass für das sekundäre, abfließende Abgas sowie mindestens einen weiteren Einlass zur Dosierung von festem, teilchenförmigem Material in den Reaktor aufweist, wobei
• erste Verbindungselemente (1) dazu dienen, das sekundäre Abgas aus dem ersten Reaktor (9) zum Gaseinlass des zweiten Reaktors (2) zu transportieren, und zweite Verbindungselemente (3) dazu dienen, die aus dem zweiten Reaktor (2) entfernten abgehende Feststoffe zum ersten Reaktor (9) zu transportieren,
**dadurch gekennzeichnet, dass**
• die Vorrichtung mindestens ein Wärmetauscherelement (16) umfasst, das zwischen den ersten Anschlusselementen (1) für das aus dem ersten Reaktor (9) abfließende Abgas und den zweiten Anschlusselementen (3) für die aus dem zweiten Reaktor (2) abfließenden Feststoffe verbaut ist, um den Wärmeaustausch zwischen den abfließenden Feststoffen und dem abfließenden Abgas zu vermitteln, und
• das Wärmetauscherelement (16) ein Gegenstrom-Wärmetauscherelement ist, das im indirekten Modus arbeitet.

14. Vorrichtung nach Anspruch 13, wobei das im Gegenstrombetrieb arbeitende indirekte Wärmetauscherelement (16) ein Plattenwärmetauscher ist.

15. Vorrichtung nach Anspruch 13, wobei das indirekte Wärmetauscherelement (16) ein Mantel-Platten-Wärmetauscher ist.

16. Vorrichtung nach einem der Ansprüche 13 bis 15, wobei der zweite Wirbelschichtreaktor (2) auf eine Temperatur von 40 bis 140 °C gekühlt oder geregelt wird, d.h. die Temperatur wird oberhalb, aber näher am Taupunkt von Wasser gehalten, und eine Wassereinspritzung in oder nahe einem Eintrittspunkt des zweiten Wirbelschichtreaktors (2) zur Fluidisierung von Gas und / oder eines Feststoffs aufweist.

17. Vorrichtung nach Anspruch 13, wobei der erste Wirbelschichtreaktor (9) das primäre Rauchgas als Fluidisierungsmedium verwendet, und wobei das primäre Rauchgas durch einen anderen Prozess oder eine andere Prozesseinheit erzeugt wird, und wobei der zweite Wirbelschichtreaktor (2) das sekundäre Abwasser als Fluidisierungsmedium verwendet.

18. Vorrichtung nach Anspruch 13 und folgenden, wobei eine erste Zykloneinheit (10) mit dem Auslass des ersten Reaktors (9) verbunden ist, um Feststoffe aus dem abfließenden Abgas zu entfernen und wieder in den ersten Reaktor (9) zurückzuführen, und wobei eine zweite Filtereinheit (4), vorzugsweise ein zweiter Zyklon, mit dem Auslass des zweiten Reaktors (2) verbunden ist, um abfließende Feststoffe zu entfernen und wieder in den zweiten Reaktor (2) zurückzuführen, und wobei vorzugsweise ein regulierbares Verbindungselement die Entfernung von Feststoffen, vorzugsweise wasserfreiem CaSO₄, aus dem Rückführungskreislauf für Feststoffe des ersten Reaktors (9) ermöglicht und optional stromabwärts eines solchen Verbindungselements eine Kühleinheit (11) und / oder eine Speicherkammer (12) für das wasserfreie CaSO₄ umfasst, das auf diese Weise während des Betriebs geerntet werden kann.

19. Vorrichtung nach Anspruch 13, bei der der erste Reaktor (9) und gegebenenfalls ein die Zykloneinheit (10) umfassender Rückführungskreislauf für Feststoffe mit hitzewiderstandsfähigen Materialien ausgestattet ist, um Betriebstemperaturen von 500 - 1000 °C zu ermöglichen, und ist optional und vorzugsweise mit Isolationsmaterialien ausgestattet, um den Wärmeverlust an die Umgebung zu minimieren, und / oder wobei der zweite Reaktor (2) Mittel zum Kühlen des zweiten Reaktors (2) während des Betriebs aufweist, vorzugsweise mindestens eine Leitung zum Einspritzen von Wasser während des Betriebs.

20. Vorrichtung nach Anspruch 13, wobei die Vorrichtung abfließende Feststoffe umfasst, die aus partikelförmigem Material mit einem Durchmesser von 0,001 bis 2 mm bestehen (Maschenweite:- 0,001 +2 [mm]).

## Revendications

1. Procédé de désulfuration de gaz de combustion comprenant du SO₂ gazeux et de conversion du SO₂ en CaSO₄ anhydre, comprenant les étapes consistant à :
• faire réagir le gaz de combustion comprenant du SO₂ avec un flux entrant de Ca(OH)₂ solide et/ou de CaO solide dans un premier réacteur à lit fluidisé (9), ledit premier réacteur fonctionnant à une température plus élevée,
• un flux de gaz de combustion d'effluent provenant du premier réacteur à lit fluidisé (9) étant ensuite utilisé pour entrer directement en contact avec le Ca(OH)₂ solide et/ou le CaO solide dans une unité d'absorbeur à température plus basse, ladite unité d'absorbeur étant un deuxième réacteur à lit fluidisé (2), et
• le solide d'effluent en recirculation depuis ledit deuxième réacteur à lit fluidisé (2) étant au moins partiellement retiré afin d'être utilisé comme ledit flux entrant de solide pour le premier réacteur à lit fluidisé (9), et
• finalement, récolter du CaSO₄ anhydre à partir dudit premier réacteur à lit fluidisé (9), et
• le gaz de combustion d'effluent en provenance du premier réacteur à lit fluidisé (9) est transporté par des premiers éléments de connexion (1) vers l'entrée de gaz du deuxième réacteur à lit fluidisé (2), et les solides retirés du deuxième réacteur à lit fluidisé (2) sont transportés par des deuxièmes éléments de connexion (3) vers le premier réacteur à lit fluidisé (9),
**caractérisé en ce que**
• le gaz de combustion d'effluent en provenance du premier réacteur à lit fluidisé (9) est utilisé pour chauffer le Ca(OH)₂ solide et/ou le CaO solide fluidifié au gaz qui s'écoule vers le premier réacteur à lit fluidisé (9) depuis le deuxième réacteur à lit fluidisé (2) dans au moins un élément échangeur de chaleur (16) qui fonctionne en mode contre-courant, et
• l'échange de chaleur s'effectue par l'intermédiaire des solides d'effluent et des gaz perdus d'effluent par échange de chaleur entre les premiers éléments de connexion (1) pour les gaz perdus d'effluent en provenance du premier réacteur à lit fluidisé (9) et les deuxièmes éléments de connexion (3) pour les solides d'effluent en provenance du deuxième réacteur à lit fluidisé (2), et
• l'au moins un élément échangeur de chaleur (16) est un élément échangeur de chaleur indirect qui fonctionne en mode contre-courant.

2. Procédé selon la revendication 1, le premier réacteur ou le deuxième réacteur à lit fluidisé ou les deux fonctionnant dans un mode de circulation continue étendue.

3. Procédé selon la revendication 1 ou 2, le Ca(OH)₂ solide étant de la chaux hydratée et/ou le CaO solide étant de la chaux vive, et étant de préférence aucun matériau qui se produit naturellement.

4. Procédé selon la revendication 1 ou 2, le Ca(OH)₂ solide ou le CaO solide étant un matériau poreux ayant une surface BET de 5 à 25 m²/g ou plus.

5. Procédé selon l'une des revendications précédentes, le premier réacteur à lit fluidisé (9) fonctionnant à une température de 500 °C à 1000 °C, fonctionnant de préférence de 650 °C à 850 °C.

6. Procédé selon la revendication 3 ci-dessus, le deuxième réacteur à lit fluidisé (2) étant refroidi à une température de 40 °C à 140 °C, de préférence par injection d'eau dans ou à proximité d'un point d'entrée de gaz et/ou de solide du deuxième réacteur à lit fluidisé (2).

7. Procédé selon l'une des revendications précédentes, le procédé étant toujours mise en oeuvre en tant que procédé hétérogène gaz-solide et/ou étant mis en oeuvre sensiblement en l'absence de formation de toute boue liquide.

8. Procédé selon l'une des revendications précédentes, les gaz perdus du procédé étant libérée après être passés à travers l'unité d'absorbeur ou le deuxième réacteur à lit fluidisé (2) et étant régulés à ≤ 20 mg/m³ de SO₂ à 20 °C et 1013,25 mbar ; poids à sec, 6 % vol. d'O₂.

9. Procédé selon la revendication 1 ou 2, le premier réacteur à lit fluidisé (9) étant chauffé par la réaction exotherme du SO₂ avec le Ca(OH)₂ et/ou le CaO solide pendant le fonctionnement.

10. Procédé selon la revendication 9, le rapport stoechiométrique de Ca:S dans le premier réacteur à lit fluidisé (9) étant de 1,2 à 2,5, de préférence étant de 1,4 à 2,2.

11. Procédé selon l'une des revendications précédentes, au moins le premier réacteur à lit fluidisé (9) fonctionnant à une vitesse du gaz d'au moins 4 m/s ou au-delà, de préférence jusqu'à 10 m/s.

12. Procédé selon l'une des revendications 1 à 11, le Ca(OH)₂ solide et/ou le CaO solide étant introduit dans le deuxième réacteur à lit fluidisé (2), ce qui constitue l'étape de procédé à sec de finition pour les gaz de combustion prépurifiés entrants englobant des quantités cependant résiduelles de SO₂ à ce stade, et des quantités modérées d'eau sont pulvérisées dans le deuxième réacteur à lit fluidisé (2) afin de réguler la température à environ 75 °C.

13. Appareil de désulfuration de gaz de combustion comprenant du SO₂, l'appareil comprenant un premier réacteur à lit fluidisé (9) pourvu d'une entrée pour un conduit de fumées primaire entrant ou du gaz de fluidisation et pouvant fonctionner dans un mode de circulation étendue et comprenant en outre une sortie pour des gaz perdus d'effluent secondaires et l'appareil comprenant en outre un deuxième réacteur à lit fluidisé (2) pouvant fonctionner dans un mode de circulation étendue et comprenant une entrée pour lesdits gaz perdus d'effluent secondaires ainsi qu'au moins une entrée supplémentaire pour le dosage de matériau particulaire solide dans le réacteur,
• des premiers éléments de connexion (1) servant à transporter lesdits gaz perdus d'effluent secondaires du premier réacteur (9) à l'entrée de gaz du deuxième réacteur (2), et des deuxièmes éléments de connexion (3) servant à transporter les solides d'effluent retirés du deuxième réacteur (2) vers le premier réacteur (9),
**caractérisé en ce que**
• l'appareil comprend au moins un élément échangeur de chaleur (16) adapté entre les premiers éléments de connexion (1) pour les gaz perdus d'effluent en provenance du premier réacteur (9) et les deuxièmes éléments de connexion (3) pour les solides d'effluent provenant du deuxième réacteur (2), afin d'effectuer l'échange de chaleur entre les solides d'effluent et les gaz perdus d'effluent, et
• l'élément échangeur de chaleur (16) est un élément échangeur de chaleur à contre-courant qui fonctionne en mode indirect.

14. Appareil selon la revendication 13, l'élément échangeur de chaleur (16) indirect qui fonctionne en mode contre-courant étant un échangeur de chaleur à plaques.

15. Appareil selon la revendication 13, l'élément échangeur de chaleur (16) indirect qui fonctionne en mode contre-courant étant un échangeur de chaleur à calandre et plaques.

16. Appareil selon les revendications 13 à 15, le deuxième réacteur à lit fluidisé (2) étant refroidi ou régulé à une température de 40 °C à 140 °C, ce qui veut dire que la température est maintenue au-dessus mais plus proche du point de rosée de l'eau, et comprend une injection d'eau dans ou à proximité d'un point d'entrée du deuxième réacteur à lit fluidisé (2) pour le gaz de fluidisation et/ou pour un solide.

17. Appareil selon la revendication 13, le premier réacteur à lit fluidisé (9) utilisant lesdits gaz de combustion primaires en tant que fluide de fluidisation, et lesdits gaz de combustion primaires étant générés par un autre procédé ou unité de procédé, et le deuxième réacteur à lit fluidisé (2) utilisant lesdits gaz perdus d'effluent secondaires en tant que fluide de fluidisation.

18. Appareil selon la revendication 13 et les suivantes, une première unité à cyclone (10) étant reliée à la sortie dudit premier réacteur (9) pour l'élimination et la recirculation des solides provenant desdits gaz perdus d'effluent de nouveau dans ledit premier réacteur (9), et une deuxième unité de filtre (4), de préférence un deuxième cyclone, étant reliée à la sortie dudit deuxième réacteur (2) pour l'élimination et la recirculation des solides d'effluent dans ledit deuxième réacteur (2), et de préférence un éléments de jonction régulable permettant de retirer les solides, de préférence le CaSO₄ anhydre, de la boucle de recirculation pour les solides dudit premier réacteur (9) et, en option, comprenant en outre en aval d'un tel élément de jonction, une unité de refroidissement (11) et/ou une chambre de stockage (12) pour le CaSO₄ anhydre qui peut être récolté de cette manière pendant le fonctionnement.

19. Appareil selon la revendication 13, le premier réacteur (9) et, en option, une boucle de circulation pour les solides comprenant la première unité à cyclone (10), étant équipé de matériaux résistants à la chaleur pour permettre des températures de fonctionnement de 500 à 1000 °C, en option et de préférence étant équipé de matériaux d'isolation de manière à réduire au minimum les pertes thermiques vers l'environnement, et/ou le deuxième réacteur (2) possédant des moyens pour refroidir le deuxième réacteur (2) pendant le fonctionnement, de préférence possédant au moins un conduit pour injecter de l'eau pendant le fonctionnement.

20. Appareil selon la revendication 13, l'appareil comprenant des solides d'effluent qui sont de la matière particulaire de 0,001 à 2 mm de diamètre (taille de mailles : -0,001 +2 [mm]).
